# EUROPEAN PATENT SPECIFICATION

(11) **EP 1 341 663 B1**
(45) Date of publication and mention of the grant of the patent: **22.02.2006**
(21) Application number: 01270419.3
(22) Date of filing: 11.12.2001
(51) Int. Cl.: B29C 67/00

(54) **MATERIAL PROCESSING**
MATERIALVERARBEITUNG
TRAITEMENT DE MATERIAU

(30) Priority: 11.12.2000 GB 0030182
(43) Date of publication of application: 10.09.2003
(73) Proprietor: BRUNEL UNIVERSITY, Middlesex, UB8 3PH (GB)
(72) Inventor: HORNSBY, Peter, Ridsdale, c/o Brunel University, Uxbridge, Middlesex UB8 3PH (GB); MATTHEWS, Siobhan, Olive, c/o Reg. Developm. Ctr, Dublin Road, Dundalk, Co.Louth (IE)
(74) Representative: Jehan, Robert
(86) International application number: PCT/GB2001/005489
(87) International publication number: WO 2002/047893

(56) References cited:
- EP-A- 0 914 919
- US-A- 4 990 595
- US-A- 5 884 138

## Description

The present invention relates to material processing, in particular where it is required to cause the material to flow during processing. Examples are the formation of products by extrusion, moulding and the like.

The production of articles by extrusion, moulding and similar methods is limited by the viscosity of the material being processed. This has the effect of dictating the processing temperature, which will commonly alter the viscosity of the material and as a result the material solidification time. For example, if it is necessary to heat the material to an elevated temperature in order to mould it, it will be necessary to wait for the mould to cool to solidify the moulded product. The higher the processing temperature, the longer the time needed to cool. Moreover, some materials have too high a viscosity to be processed in this manner, at any practicable processing temperature. It is known to add supercritical carbon dioxide to a polymer during extrusion in order to foam the polymer. It is also known that the supercritical carbon dioxide does lower the viscosity of the polymer melt but only as a side effect to foaming and not used as part of the processing of the material.

More specifically, during flow, the majority of polymers and polymer-based material systems exhibit pseudoplastic rheological behaviour, which is non-Newtonian. Viscosity of these systems is reduced by the input of shear and temperature during processing. Polymer and polymer-based materials processing equipment are designed to heat the material, apply shear forces and in the case of thermoplastics, subsequently cool the component after shaping. In, for example, the injection moulding process, material is fed into a heated barrel where typically minimum processing temperatures of 50°C above the melt temperature and 100°C above the glass transition temperature are generally necessary. Shear is induced during melt plastisation and injection into the mould, where pressures as high as 50 to 100 MPa are required due to the viscous nature of the materials. Large clamping forces are necessary to counteract these high injection pressures, resulting in robust and costly construction of machines and moulds. Furthermore, the high viscosity of polymer melts inhibits their flow during processing, reducing throughputs during extrusion processes and complicating filling of complex injection mould cavities. Although raising melt temperatures will reduce viscosity of the material, cooling times to solidify the material are extended after shaping, thereby lowering production rates.

Many polymers, including unplasticised poly(vinyl chloride) (PVC), polycarbonate (PC) and some elastomeric polymers, such as natural rubber have very high melt viscosities, further exacerbating processing problems by raising melt pressures during moulding and extrusion. Increasing melt temperature, in order to reduce viscosity and enhance flow, is limited by the thermal instability of polymers, particularly in the case of PVC. Some polymers such as ultrahigh molecular weight polyethylene (UHMWPE), where the molecular weight exceeds 1 million, generally cannot be processed by conventional melt processing techniques, such as extrusion and injection moulding. The lack of flow in these systems necessitates modifications to the material composition or alternative processing measures such as sintering under pressure, to fabricate parts. Similar constraints exist with poly(tetrafluoroethylene) (PTFE) arising from strong inter-chain forces in this material.

Additives are included in polymers for a variety of reasons, such as to enhance processability, functionality, or simply to reduce cost. Fillers (of organic or inorganic origin) may require inclusion at high filler levels, which commonly increases melt viscosity, thereby significantly limiting processability. In the case of ceramic and metal powders combined with sacrificial polymer binders acting as vehicles to facilitate fabrication, filler loadings may exceed 60% by volume. Viscosities can be exceedingly high and in some cases flow may cease altogether due to the dilatent (or shear thickening) nature of the material, placing restrictions on the upper filler loading possible.

In the case of energetic polymer formulations, thermally unstable explosive additives are contained in polymers to allow shaping into finished parts by melt processing. However, the high levels needed for the product function increases viscosity of the material, which due to the shear heating effect created in viscous polymer melts can cause local hotspots and serious safety implications.

The application of supercritical fluids (SCF) technology to polymer melt processing, as a means of producing microcellular foams, has been reported, in particular by Trexel Inc. Through its Mucell process, its has successfully commercialised this approach for foaming of polyolefins and other commodity plastics. Reference is made to US-A-5,334,356; US-A-6,051,174; the article by Lee L.J. and Tzoganakis C. and Park C.B., *Extrusion of PE*/*PS Blends with supercritical carbon dioxide,* Polym. Eng. Sci. 38, 1998, 1112; British patent application No. 0030182.0,; and the article by Hornsby P.R., *Rheology, compounding and processing of filled thermoplastics,* Adv. in Polym. Sci. 139, 1999, 156-217. Lee and Tzoganakis have reported that the presence of supercritical fluids during processing can improve the miscibility between two polymer systems, such as polystyrene and poly(ethylene). It has also been reported that supercritical carbon dioxide (scCO₂) introduced to produce polymer foams, has the added benefit of reducing poymer viscosity during melt processing, possibly through a solvating or plasticizing effect.

EP-A-0914919 discloses a method for facilitating injection molding of a thermoplastic resin by reducing the viscosity of a molten resin without impairing the physical properties of the resin, the surface appearance of the molded article and productivity. In the method for injection molding of a thermoplastic resin, a thermoplastic resin in which not less than 0.2% by weight of carbon dioxide is dissolved is injected into a mold cavity pressurized with a gas beforehand to at least a pressure where foaming does not take place in the flow front of the molten resin.

US-A-4,990,595 discloses that by treating aromatic polycarbonates, aromatic polyester carbonates and aromatic and/or araliphatic polyesters in the molten state with super-critical gases or gas mixtures under pressure, the melt viscosity of these polymers is considerably lowered so that basic chemical operations which proceed only incompletely under the usual conditions can be carried out on these thermoplasts.

The present invention seeks to provide improved processing of materials.

According to an aspect of the present invention, there is provided a method as defined in claim 1.

The processing at lower material viscosity is carried out without causing or allowing the material to foam. This can be achieved in a variety of manners, as described below, and may for example include maintaining the material above a predetermined pressure.

A preferred embodiment adds to the material an amount of supercritical fluid which is insufficient to cause foaming to the material. The precise amount or proportion of supercritical fluid can be determined by experiment In practice, reductions in viscosity of around 25% have been achieved at levels of supercritical fluid which are still insufficient to cause foaming.

Another embodiment provides a higher amount or proportion of supercritical fluid and the method includes the step of preventing the material from foaming during processing, for example by control of pressure and/or temperature, and removing the fluid from the material during or after processing thereof. With this embodiment, it is possible to achieve greater reductions in viscosity while still being able to avoid foaming of the material and thus eventual product

The present invention uses supercritical and near supercritical fluid technology for the processing of polymers and polymer-containing formulations without induced foaming, giving benefits of either reduced melt viscosity and/or lower melt temperatures. Its application is particularly beneficial to difficult to process materials, including unplasticised PVC, polycarbonate, PTFE, UHMWPE and polymers containing high loadings of fillers of organic or inorganic origin. Shear and thermally sensitive materials can also be processed using this method with less risk of degradation, due to the lower shear input and reduced processing temperatures necessary.

The present method can be applied to the continuous manufacture of porous ceramic or metal components, involving high loadings of ceramics or metals contained in sacrificial polymer binders, which are removed after the forming stage, before the ceramic or metallic preform is sintered and densified at high temperature. This technique has been found to provide more control of pore structure relative to alternative batch techniques that are currently available for making foamed ceramics and metals.

In practical embodiments.removal of the supercritical fluid can be by positive extraction, such as by suction, and/or by providing a porous section of processing assembly which retains the material and allows egress of the supercritical fluid.

In this alternative, foaming is prevented during processing by control of pressure of the material and fluid combination.

The supercritical fluid is preferably carbon dioxide. Other supercritical fluids could be used, an example being water or nitrogen.

Acccording to another aspect of the present invention, there is provided a system as defined in claim 13.

A preferred embodiment includes means for removing the fluid from the material during or after processing thereof The removing means may provide positive extraction, such as by suction and/or include a porous section which retains material and allows egress of the supercritical fluid.

The preferred embodiments can provide faster processing of materials, due to their lowered viscosity and/or processing at lower temperatures, which can considerably reduce cooling time. Moreover, it allows the processing of materials not currently processable because their viscosity was too high.

Examples of polymers which can be processed by the disclosed process are LDPE, PS, HDPE, PP, PA, PTFE and UHMWPE. Similarly, the technique can be used to process any metal or ceramic powder which is compatible with a polymeric binding system, and can also process wood flour, wood fibres and natural fibres. Materials that are not supportive of high shear behaviour such as energetic materials can also be processed.

An example of a material with a viscosity which is too high is ultra-high molecular weight polyethylene (molecular weight greater than one million) which due to its very high melt viscosity cannot normally be processed by extrusion or injection moulding apparatus and is generally processed into finished parts by sintering of powder under pressure.

An embodiment of the present invention is described below, by way of example only, with reference to the accompanying drawings, in which:
Figure 1 is a schematic diagram of an embodiment of system;
Figure 2 is a graph showing apparent viscosity reduction with respect to the presence of CO₂ during melt processing of low density polyethylene at 180°C;
Figures 3A to 3C are different views of an embodiment of slit die for use in in-line rheometry measurements;
Figure 4 is a schematic diagram of an embodiment of process apparatus used for in-line rheometry measurements;
Figure 5 is a schematic diagram of an embodiment of process apparatus used for supercritical and near supercritical fluid assisted injection moulding;
Figure 6 is a schematic diagram of an embodiment of process apparatus used for supercritical and near supercritical fluid assisted melt processing using the Osciblend technique;
Figure 7 shows components produced by the Osciblend technique using the apparatus of Figure 6;

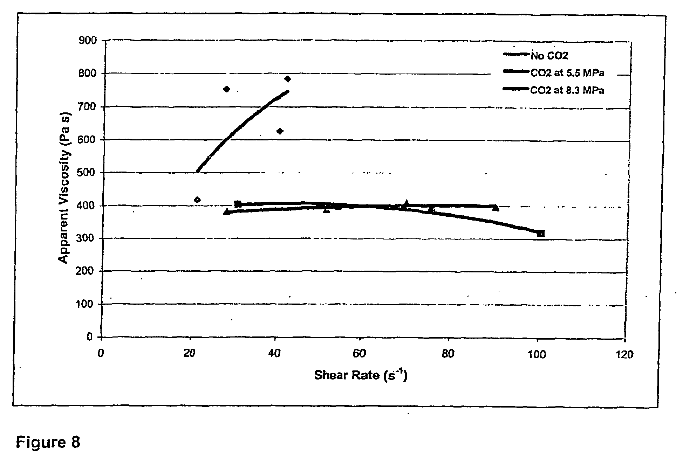

Figure 8 is a graph showing rheological behaviour when LDPE/silicon nitride is processed with carbon dioxide;
Figure 9a shows an example of porous silicon nitride extruded at 180°C with scCO₂;
Figure 9b shows an example of porous silicon nitride extruded at 100°C with scCO₂;
Figure 9c shows an example of partially sintered silicon nitride extruded at 180°C with scCO₂;
Figure 10 shows an aluminium/HDPE test bar (green state), processed with CO₂, exhibiting preferential porosity, where area A was at higher pressure than area B; and
Figure 11 shows the internal porous structure of a sintered Al₂O₃ test bar.

The system of the preferred embodiments makes use of the realisation that significant plasticisation effects are achievable in polymers in a molten or resinous state through interaction with supercritical fluids.

Although the known 'Mucell' process for producing microcellular polymer foams by extrusion or injection moulding also involves metering of supercritical carbon dioxide into the melt, the described embodiments concern the application of supercritical fluids to produce solid processed polymeric parts. Foaming is prevented, either by optimum control of processing conditions and/or by the use of modified process technology, where gas formed by decompression of supercritical fluid is removed prior to, or during, formation of the processed part, and is therefore not entrained as gas bubbles in the final artefact. Potential means for achieving this include controlled venting through porous inserts in extrusion dies and injection moulds. Foamed products can also be made by the described apparatus, and some examples of these are given below.

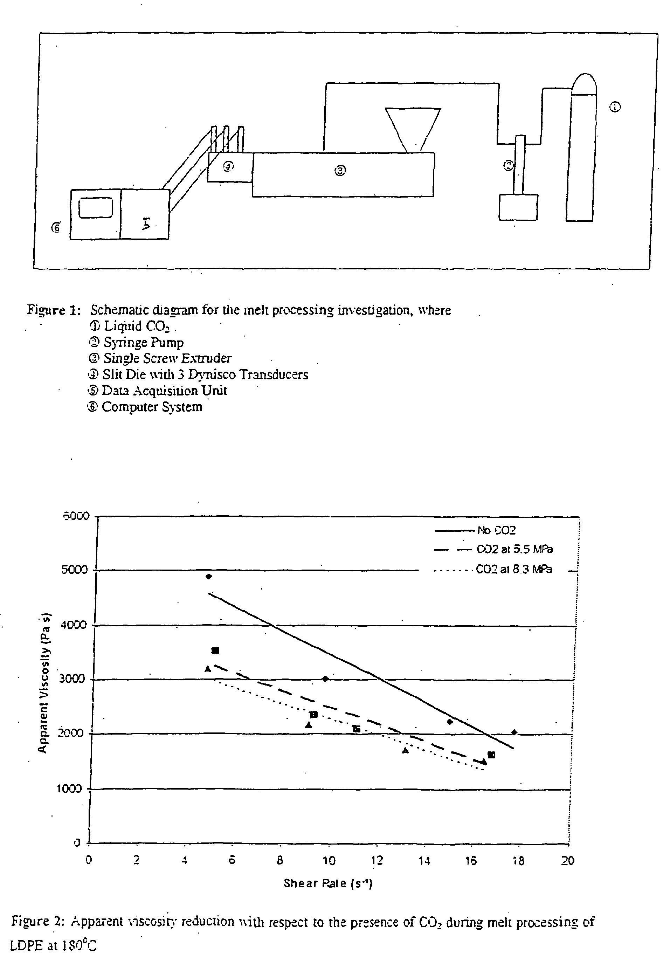

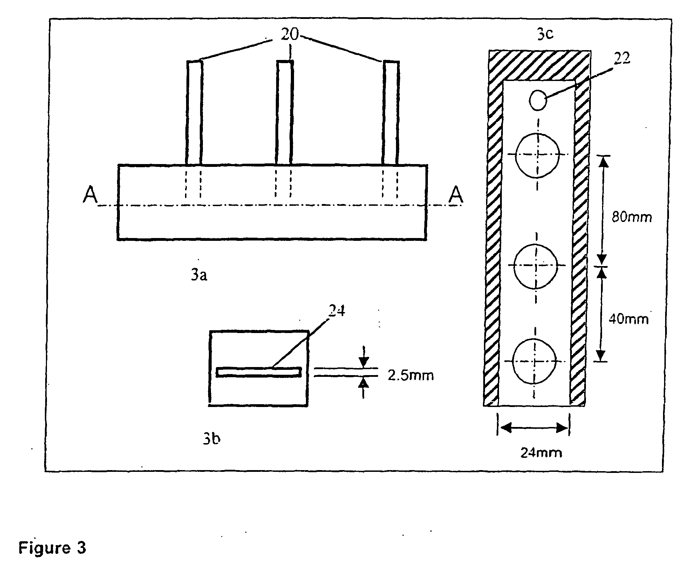

Referring to Figure 1, the apparatus shown schematically basically includes a supply 1 of supercritical fluid, in this example carbon dioxide. A syringe pump 2 is located between the supply 1 and a single screw extruder 3 to control the flow of fluid to the extruder. The extruder 3 includes an inlet for the introduction of a material to be extruded and a measuring system including a computer 6, a data acquisition unit 5 and a slit die 4 with, in this embodiment, three Dynisco pressure transducers used for measuring the melt viscosity of polymer flowing through the die to obtain the data given in Figure 2. The system can control the addition and mixing of supercritical fluid in the material to be processed and the material subsequent to that to prevent foaming. Fluid extraction means may also be provided to allow use of higher concentrations of supercritical fluids and may include elements such as fluid suction systems, pressure systems and/or porous membranes allowing escape of fluid (gaseous) but not material.

Referring now to Figure 3, this shows an embodiment of slit die configuration used for in-line rheometry measurements. Figure 3a shows the slit die in side elevation, Figure 3b shows it in front elevation and Figure 3c is plan elevation. The slit die is provided with three pressure transducers 20 which may be Dynisco transducers. The slit die is provided with a point of entry 22 for material under test and a point of exit 24. It will be appreciated that the die is not drawn to scale and that the dimensions given are merely indicative dimensions.

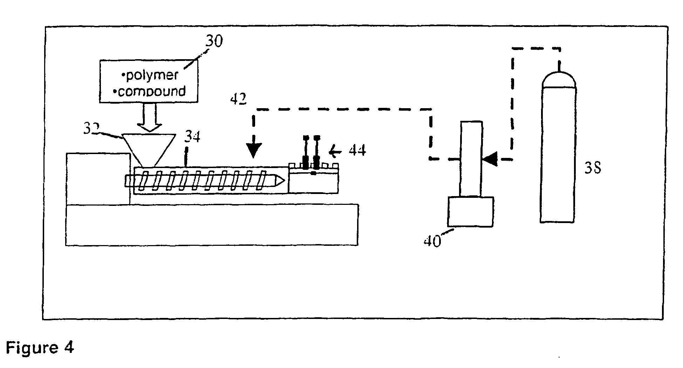

Another embodiment of process apparatus is shown in Figure 4, which is designed for in-line rheometry measurements. In this figure, polymer or material compound 30 to be tested is fed into a hopper 32 of the system and then into an extruder 34. A source 38 of fluid is coupled to a syringe pump 40 in which it is pressurised under controlled temperature and then fed to inlet 42 into the extruder. Slit die 44 provides the measurement transducers for taking measurements which are then fed to a data acquisition unit for analysis.

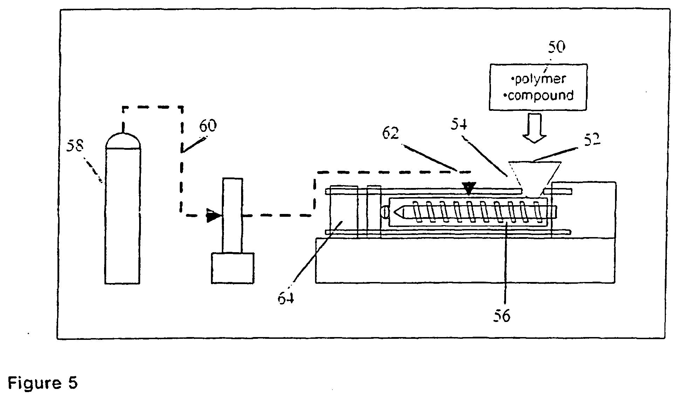

Referring to Figure 5, this shows in schematic form an embodiment of apparatus used for supercritical and near supercritical fluid assisted injection moulding. Polymer or material compound 50 to be moulded, is fed into a hopper 52 of the apparatus and into the injection moulder 54. The injection moulder 54 is provided with a heated barrel 56.

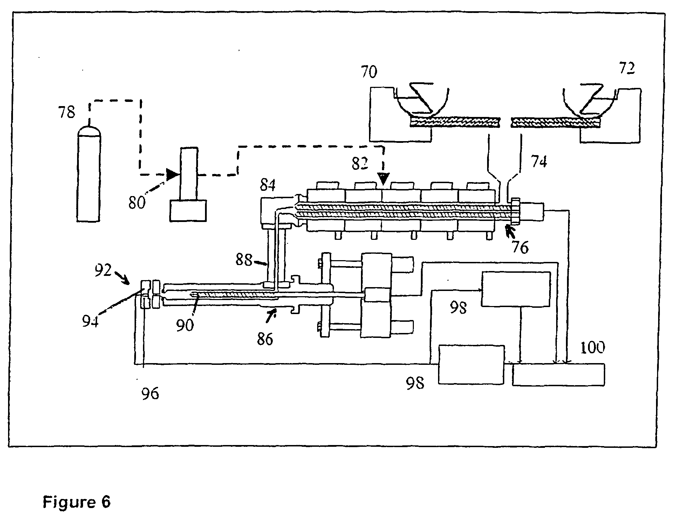

A source 58 of fluid is coupled to a syringe pump 60 and pressurised under controlled temperature thereby. The pressurised fluid is fed into the moulder at point of injection 62, wherein a mould tool 64 is provided for shaping the component thus produced. Referring to Figure 6, this shows an embodiment of process line used for supercritical and near supercritical fluid assisted melt processing using the Osciblend technique. In this embodiment, there is provided a ceramic and metal powder feeder 70, a binder feeder 72, a hopper 74 for feeding the material into a twin screw extruder 76. A source 78 is fluid pressurised under controlled temperature by syringe pump 80 and then fed at injection point 82 into the twin screw extruder 76. The material and fluid is passed through a modified die head 84 and fed into single screw injection unit 86 via a cross manifold 88. When the correct shot size is achieved both the twin screw extruder 76 and the single screw injection unit 86 stops rotating and the single screw 90 moves forward which results in injection of the material/fluid mixture into the mould tool 92. The mould tool 92 has a cavity pressure transducer 94 fitted and the output from this transducer 94 is received by a Kistler AQCS and charge amplifier 96, 98. The output can be fed into the Osciblend microprocessor controller 100 for closed loop processing.

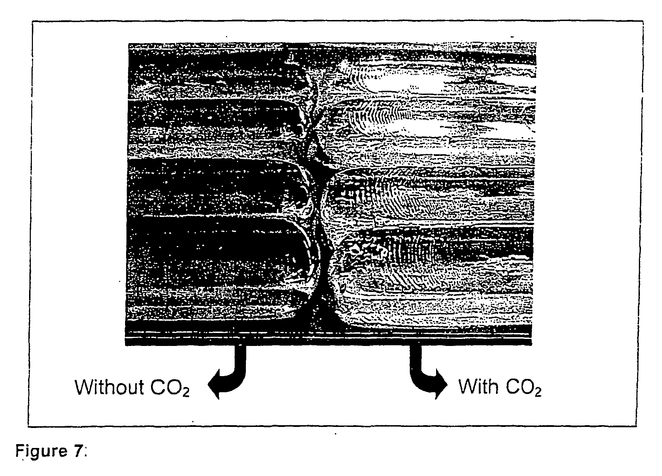

Figure 7 shows examples of components produced using the Osciblend technique and the apparatus of Figure 6.

The described embodiments are primarily considered relevant to the processing of thermoplastics and thermosets, in their molten or fluid state, but also applicable to many other materials which interact with supercritical fluids whilst in a liquid state, giving rise to a reduction in viscosity. This could include foods; soft solids or liquids, surfactant-based formulations; or ceramics mixtures and metallic mixtures. Easier processing of polymer formulations containing high loadings of additives, which give rise to a large increase in viscosity, is an important potential area of application, as is the use of supercritical fluids to facilitate processing of polymers with inherently high melt viscosities arising from their molecular structure (e.g. polytetrafluoroethylene, ultra high molecular weight polyethylene and rubbers with high molecular mass).

Specific areas of use with filled polymer systems include:
- thermoplastics compositions containing high levels of heat sensitive inorganic flame retardant fillers, enabling processing at lower temperatures and pressure and incorporation of increased filler levels to give enhanced fire retardant performance;
- polymer-based formulations containing high levels of energetic or active fillers, where reduced melt pressures and temperatures would result in lower risk of explosion during processing;
- polymer-based magnets where high filler levels and improved magnetic properties may be achievable;
- ceramics and metal compositions formulated using sacrificial polymer binders to facilitate flow during extrusion and injection moulding processes. Lower melt viscosities would enable formulation of compositions with higher filler levels; reducing thermal debinding times and defect levels produced;
- improving wet-out and impregnation of reinforcing fibres in thermoplastics and thermoset compounds, through reduced melt viscosities, leading to improved mechanical properties of these composites.

In use, the plasticising action of supercritical carbon dioxide in polymer melts is measured using in-line rheometry applied to a single screw extruder. Rheometry is preferably only used to quantify the levels of viscosity reduction achievable and is not strictly needed in an extrusion or moulding process which provides a final product.

By optimising processing conditions, gas dose rate, temperature and pressure, significant viscosity reductions can be achieved, enabling enhancement of process performance.

The application and potential use of this effect to different polymers is possible, including highly filled compositions used in ceramic fabrication.

With a greater understanding of the mechanisms occurring during melt processing new technologies could emerge such as new reactive processing techniques, in-situ materials recycling, and shaping of difficult materials whether they are process sensitive or heavily filled compositions.

By optimising processing the supercritical fluid can be removed to avoid foaming and therefore produce a solid component; this means that the benefits of SCFs can be utilised to melt process a broad range of products.

### Example 1

A 25mm Betol single screw extruder 1 was used with a conventional polyolefin screw profile. A special injection port was designed in-house which allowed direct injection of scCO₂ through a conventional pressure transducer port. No modifications were made to the extruder 1.

A slit die 4 was designed that allowed in-line rheometry: The slit die contained three Dynisco pressure transducers and a thermocouple all of which were connected to an Adept Strawberry Tree Data Shuttle Express 4 (Adept Scientific, Letchworth, UK). Liquid carbon dioxide was compressed under controlled temperature conditions using an Isco 260D syringe pump 4 (Isco, Inc., Nebraska, USA). Pressures used were 5.5 MPa (800psi) and 8.3 MPa (1200psi) respectively. The process line is shown schematically in Figure 1. Low density poly(ethylene) (Novex, BP Chemicals, UK) was used to study the processing effect. Processing details are outlined in Table 1.

**Table 1: Processing conditions for the LDPE extrusion.**

| Temperature (°C) | Screw Speeds (rpm) |
|---|---|
| Barrel Zone 1 170 | 5 |
| Barrel Zone 2 175 | 10 |
| Barrel Zone 3 180 | 15 |
| Slit Die 180 | 20 |

Although the average viscosity reduction observed was lower than the reports of previous researchers, at 25% this is still quite significant for polymer processing companies as machine operating overheads could be substantially reduced. Figure 2 shows the viscosity reduction with respect to shear rate at and the presence of CO₂.

When subcritical CO₂ was injected during processing at 0.13wt% a reduction in viscosity was recorded. At supercritical CO₂ pressure (0.43wt%) a viscosity reduction was also calculated, but this reduction does not appear to be proportional to the CO₂ pressure. Foaming that is commonly reported when using SCFs during polymer processing was negligible and was found to be dependent on screw speed, temperature, CO₂ dose rate and pressure.

Screw speed plays a simplistic but significant role in controlling the extent of foaming when a very low CO₂ dose rate was applied. When the screw speed was increased, distributive mixing of the CO₂ and the polymer melt was reduced and pore size regularity was affected. If screw speed was too slow excess CO₂ contributed to a supersaturated solution of CO₂ in the polymer melt, which resulted in a foamed component after extrusion. However, the screw speed could be adjusted to produce reduced viscosity processing without foaming. This adjustment is dependent on the polymer, the processing temperature, the gas does rate and pressure.

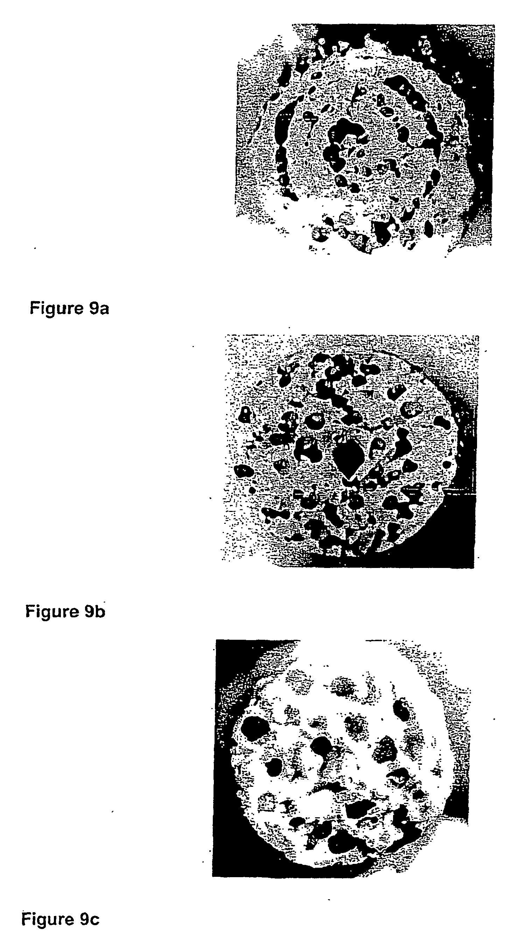

At higher gas rates using alternative screw material and profiles foaming can be reduced or eliminated. Figures 9a and 9b show debound silicon nitride extrudates. The pore sizes were controlled with the alteration of CO₂ dose rate, CO₂ pressure, processing temperature and screw speed. By reducing the processing temperature by 80°C the porosity that was created at the die exit was maintained. This was due to a viscosity drop in the material during processing. It is important to note that it would not have been possible to manufacture this formulation under these processing conditions without the aid of supercritical carbon dioxide.

Viscosity reduction was achieved even with low levels of CO₂ present during processing. It was found that during processing screw speed was a key element to achieving foam-free products. This leads the way for a greater applicability for the use of SCFs as processing aids rather than just foaming agents in polymer melt processing.

### Example 2

Reduced viscosity behaviour of commodity polymers without the formation of foamed components

### Case 2A: Single Screw Extrusion

A 25mm Betol single screw extruder with a conventional polyolefin screw profile was used. A slit die (Figure 3) containing Dynisco pressure transducers was used in the study. Data from the in-line rheometry experiments was recorded on an Adept Strawberry Tree Data Shuttle Express (Adept Scientific, Letchworth, UK). Liquid carbon dioxide was compressed under controlled temperature conditions (32°C) using an Isco 260D syringe pump (Isco, Inc., Nebraska, USA). Pressures used were 5.5 MPa (800psi) and 8.3 MPa (1200psi) respectively. The process line is shown schematically in Figure 4. A special injection port, designed in-house, allowed direct injection of CO₂ through a conventional pressure transducer port. No modifications were made to the extruder screw design. Low density poly(ethylene) (Novex, BP Chemicals, UK) was extruded with and without the assistance of carbon dioxide (the conditions for carbon dioxide are outlined above) at 180°C. An apparent viscosity reduction of at least 25% was reported without the extrudate foaming on exiting the die, when less than 0.5wt% of carbon dioxide was injected during processing.

### Case 2B: Twin screw extrusion

A Dassett co-rotating intermeshing twin-screw extruder with a conventional polyolefin screw profile was used. As in case 2A the rheological behaviour was recorded. A 30% reduction in viscosity was found without the polymer foaming

### Example 3

Production of moulded commodity plastics with class A surface finish

### Case 3A: Conventional injection moulding

Components were moulded on a Demag Ergotech 25-80 injection moulding machine. Supercritical and near-supercritical carbon dioxide were injected into the barrel of the single screw preplasticising unit as outlined in Figure 5. Supercritical and near supercritical fluid conditions were similar to those given in example 2. Injection pressure and shot size were reduced by at least 35% and 25% respectively compared to the conventional process when carbon dioxide was injected during plasticisation. Foaming was prevented by the application of holding pressure during melt cooling in the mould cavity. In this example, holding pressure was on average a fifth of the injection pressure for less than 25% of the complete moulding cycle - these figures are for LDPE but would vary depending on the polymer, the mould tool, the injection moulding machine, the type of fluid that is injected, and the fluid conditions such as dose rate, pressure and temperature.

### Case 3B:

### Direct compounding combined with injection moulding by the Osciblend technique

An Osciblend Mark IV direct compounding injection moulding machine was used (Figure 6). Good mixing of the fluid and the molten polymer was achieved in the compounder section of the machine. The mixture was directly fed into the injection barrel and when the correct shot size was achieved the mixture was injected into the mould. Foaming on demand was possible by the selection of appropriate injection speed, injection pressure, holding pressure, holding time, clamp force and cooling time. The combination of the process parameters required to control porosity formation is dependent on the fluid pressure, fluid dosing level, polymer repeat unit and process temperature and compounder screw speed. By altering the process parameters foaming did not take place. Shot size, holding pressure, injection speed were important factors.

Figure 7 shows components moulded using the same process parameters except that the components on the right hand side were processed with the assistance of carbon dioxide. Components processed with CO₂ had reduced viscosity, this improved the flow of the molten polymer on injection into the mould tool, which resulted in enhanced linear dimensions when compared to components moulded without the assistance of CO₂ and the process disclosed herein.

### Example 4

Processing high temperature polymers

Polycarbonate (GE Plastics, Lexan grade) was processed as outlined in case 2B. During processing supercritical fluid was injected into the barrel an initial viscosity reduction of more than 50% was recorded.

### Example 5

Melt processing of highly filled material systems

The overall trend for filled polymer systems is that an increase in viscosity accompanies increased filler loading. When material systems are processed using sub (or near) and supercritical fluid assisted techniques as outlined in the previous examples the viscosity change and the alteration of the rheological behaviour is significant Two cases are outlined for this example, these cases combined with example 6 (described below) suggest that the injection of near and supercritical fluids whilst processing can remove the current restrictions placed on filled systems.

### Case 5A: Processing highly filled systems using a single screw extruder

A mixture of LDPE with 50 vol.% 1 µm silicon nitride (Goodfellows Ltd., Cambridgeshire, UK) was V-blended with common processing aids for 45 minutes and then compounded on a twin screw extruder prior to melt processing on a single screw extruder. Dilatent behaviour was recorded when the formulation was melt processed without sub or supercritical fluid. When sub and supercritical fluid was injected the system behaved close to a Newtonian fluid. Porous extrudates were manufactured examples of these are shown in Figures 9a to 9c.

### Case 5B: Processing highly filled systems using a twin screw extruder

A material formulation of 62vol.% 53 µm alumina (Universal Abrasive) with PE and common processing aids was prepared as for Case 5A except the formulation was not compounded prior to processing. The dry mixed formulation was fed into the twin screw compounder and processed as for Case 2B. Alternatively, material can be fed directly into the twin screw extruder using the individual feeders as outlined in Figure 6. Increased shear rate, fluid dosing level and fluid pressure do not influence the viscosity reduction as once the viscosity reduction is achieved it is maintained as there appears to be a viscosity reduction threshold which is dependant on the material system and the type of fluid used. Higher volume loadings of ceramic and metal powders can be processed. Conventional processing routes are capable of processing 50 to 60vol% of fillers but now able to process ceramic/polymer and metal/polymer formulations at filler levels higher than 60vol% making the concept of reduced shrinkage on sintering and near net shape components a possibility.

### Example 6

Semi-continuous manufacture of on-demand porous metals and ceramic components.

Metal and ceramic powder formulations were prepared as outlined in Case 5A and dry processed using the Osciblend direct compounding injection moulding machine. By adjusting the processing conditions as outlined in Case 3B ceramic and metal green state components were manufactured. The level of porosity and pore/cell size was controlled by the processing parameters. A variety of components were produced with in-situ porosity.

This technique provides improved dimensional stability and near net shape components can be manufactured. Currently average component shrinkage on sintering is 20% with this production system shrinkage of less than 7% is possible. Using conventional ceramic and metal powder binder systems this new manufacturing large selection of candidate ceramic and metal powders technique can be applied with ease to encompass a broad range of ceramic and metal powder systems.

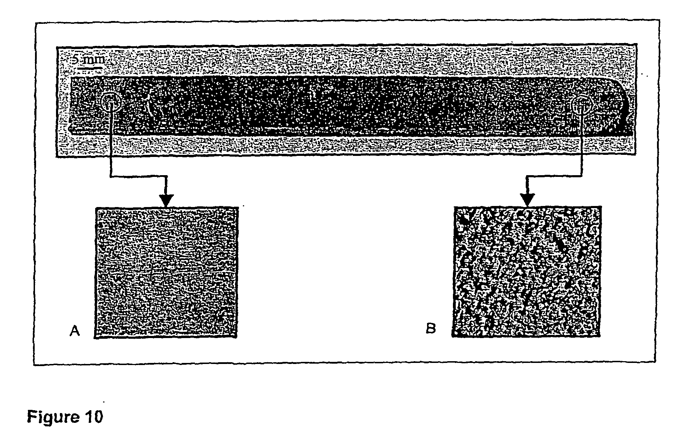

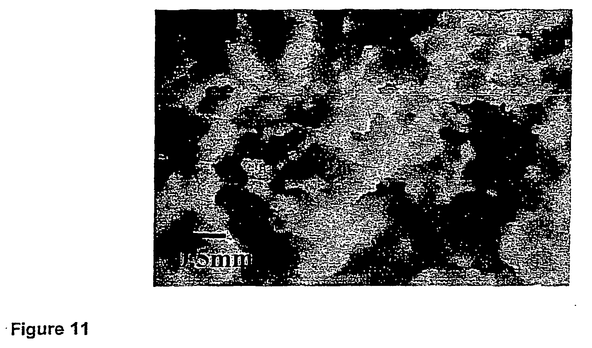

Aluminium, alumina and silicon nitride powders were processed on an extruder. All powders were blended with a variety of powdered polymers and processing aids. Figure 10 shows an PE/Al₂O₃ test bar in the green state that was moulded using a direct compounding injection moulding machine developed at Brunel University (Osciblend). The specimen indicates that with increased levels of CO₂ injection during processing porous components can be produced. The extent of porosity can also be controlled by the alteration of the processing parameters. Figure 10 shows that the right hand end of the sample has foamed since the area B was at a lower pressure. Figure 11 shows the internal porous structure of a sintered Al₂O₃ test bar.

Thus, the system can also produce controlled porous ceramics. In another example, silicon nitride (1µm particle size, Goodfellows Ltd., Cambridgeshire, UK) combined in a poly(ethylene) binder (50vol%) was processed on the Betol extruder. The formulation was first V-blended for 45mins and then compounded in a twin-screw co-rotating Dassett extruder (Dassett Process Engineering Ltd., Daventry, U.K.) at 200°C. After compounding the material was pelletised and processed on the single screw extruder with and without scCO₂. After melt processing specimens were selected and the polymer binder was removed slowly by thermal degradation.

Foamed ceramic products of controlled porosity are a major development. The effect of temperature on material viscosity and hence pore stability during processing can be clearly seen. Pore stability was achieved by a substantial reduction in processing temperature.

## Claims

1. A method of processing material in a process which requires flow of material including the steps of providing material to process, adding to the material a supercritical or near supercritical fluid to reduce the viscosity of the material, controlling at least one of the amount of supercritical or near supercritical fluid, processing pressure and processing temperature so as not to cause or allow foaming of the material, and processing the material at its reduced viscosity.

2. A method according to claim 1, wherein the amount of supercritical or near supercritical fluid added is insufficient to cause foaming to the material but sufficient to reduce the viscosity of the material.

3. A method according to claim 1 or 2, wherein the step of processing at a lower viscosity includes maintaining the material above a predetermined pressure.

4. A method according to any preceding claim, including the step of removing the fluid from the material at one of during and after processing thereof.

5. A method according to claim 4, wherein the fluid is removed by positive extraction.

6. A method according to claim 5, wherein positive extraction is carried out by suction.

7. A method according to claim 5, wherein positive extraction is carried out by providing a porous section of processing assembly which retains the material and allows egress of the supercritical fluid.

8. A method according to claim 7, wherein foaming is prevented during processing by control of pressure of the material and fluid combination.

9. A method according to any preceding claim, wherein the supercritical fluid is carbon dioxide, water or nitrogen.

10. A method according to any preceding claim, wherein the process is one of extrusion and injection moulding.

11. A method according to claim 10, wherein the material and the supercritical or near supercritical fluid are mixed in the extruder or mould.

12. A method of processing material according to any preceding claim, including the steps of providing a material with a viscosity above that required by the process and processing of said material at its reduced viscosity.

13. A system for processing material in a process which requires flow of material including means for containing material to process, means for adding to the material a supercritical or near supercritical fluid, control means operable to control at least one of the amount of supercritical or near supercritical fluid added to the material, processing pressure and processing temperature so as not to cause or allow foaming of the material, and a processing unit operable to process the material at its reduced viscosity.

14. A system according to claim 13, wherein the means for adding a supercritical or near supercritical fluid includes a container of a supercritical or near supercritical fluid.

15. A system according to claim 13 or 14, including means for removing supercritical or near supercritical fluid from the material during or after processing thereof.

16. A system according to claim 15, wherein the removing means includes a suction device.

17. A system according to claim 15 or 16, wherein the removing means includes a porous section which retains material and allows egress of the supercritical fluid.

18. A system according to any one of claims 13 to 17, wherein the system includes an extruder or mould.

19. A system according to claim 18, wherein the system provides for the material and the supercritical or near supercritical fluid to be mixed in the extruder or mould.

## Patentansprüche

1. Verfahren zur Materialverarbeitung in einem Prozess, der einen Materialfluss erfordert mit den Schritten eines Bereitstellens von Material zur Verarbeitung, eines Hinzufügens eines überkritischen oder nahezu überkritischen Fluids zum Material, um die Viskosität des Materials zu verringern, eines Regelns mindestens eines Elements umfassend die Menge von überkritischem oder nahezu überkritischem Fluid, Verarbeitungsdruck und Verarbeitungstemperatur, um ein Schäumen des Material nicht zu verursachen oder zu erlauben, und eines Verarbeiten des Materials bei seiner verringerten Viskosität.

2. Verfahren nach Anspruch 1, wobei die Menge von überkritischem oder nahezu überkritischem hinzugefügtem Fluid nicht ausreichend ist, um ein Schäumen des Material zu verursachen, jedoch ausreichend, um die Viskosität des Materials zu verringern.

3. Verfahren nach Anspruch 1 oder 2, wobei der Schritt eines Verarbeitens bei einer geringeren Viskosität ein Halten des Materials oberhalb eines vorbestimmten Drucks umfasst.

4. Verfahren nach einem der vorhergehenden Ansprüche, das den Schritt eines Entfernens des Fluids vom Material während oder nach dessen Verarbeitung umfasst.

5. Verfahren nach Anspruch 4, wobei das Fluid durch positive Extraktion entfernt wird.

6. Verfahren nach Anspruch 5, wobei die positive Extraktion durch Absaugen ausgeführt wird.

7. Verfahren nach Anspruch 5, wobei die positive Extraktion durch Bereitstellen eines porösen Abschnitts der Verarbeitungseinrichtung ausgeführt wird, die das Material zurückhält und den Austritt des überkritischen Fluids erlaubt.

8. Verfahren nach Anspruch 7, wobei ein Schäumen während der Verarbeitung durch Regelung des Drucks der Material- und Fluidkombination verhindert wird.

9. Verfahren nach einem der vorhergehenden Ansprüche, wobei das überkritische Fluid Kohlenstoffdioxyd, Wasser oder Stickstoff ist.

10. Verfahren nach einem der vorhergehenden Ansprüche, wobei der Prozess Extrusion oder Spritzgießen ist.

11. Verfahren nach Anspruch 10, wobei das Material und das überkritische oder nahezu überkritische Fluid im Extruder oder der Form oder Spritzgießform gemischt werden.

12. Verfahren zur Materialverarbeitung nach einem der vorhergehenden Ansprüche, das die Schritte eines Bereitstellens eines Materials mit einer Viskosität oberhalb der umfasst, die vom Prozess erfordert wird, und eine Verarbeitung des Materials bei seiner verringerten Viskosität.

13. System zur Materialverarbeitung in einem Prozess, der einen Materialfluss erfordert, mit einem Mittel zur Aufnahme des Materials zum Verarbeiten, einem Mittel zum Hinzufügen eines überkritischen oder nahezu überkritischen Fluids zum Material, einem Regelungsmittel, das zum Regeln wenigstens eines Elements umfassend die Menge an überkritisch oder nahezu überkritischen, zum Material hinzugefügten Fluid, Verarbeitungsdruck oder Verarbeitungstemperatur betreibbar ist, um ein Schäumen des Materials nicht zu verursachen oder zu erlauben, und einer Verarbeitungseinheit, die zur Verarbeitung des Materials bei seiner reduzierten Viskosität betreibbar ist.

14. System nach Anspruch 13, wobei das Mittel zum Hinzufügen eines überkritischen oder nahezu überkritischen Fluids einen Behälter an überkritischem oder nahezu überkritischem Fluid umfasst.

15. System nach Anspruch 13 oder 14, das ein Mittel zur Entfernung von überkritischem oder nahezu überkritischem Fluid vom Material während oder nach dessen Verarbeitung umfasst.

16. System nach Anspruch 15, wobei das Entfernungsmittel eine Absaugeinrichtung umfasst.

17. System nach Anspruch 15 oder 16, wobei das Entfernungsmittel einen porösen Abschnitt umfasst, der Material zurückhält und einen Austritt des überkritischen Fluids erlaubt.

18. System nach einem der Ansprüche 13 bis 17, wobei das System einen Extruder oder eine Form oder Spritzgießform umfasst.

19. System nach Anspruch 18, wobei das System vorsieht, dass das Material und das überkritische oder nahezu überkritische Fluid im Extruder oder der Form oder Spritzgießform gemischt wird.

## Revendications

1. Procédé de traitement d'un matériau dans un processus qui nécessite l'écoulement d'un matériau incluant les étapes consistant à fournir le matériau à traiter, à ajouter au matériau un liquide supercritique ou presque supercritique pour réduire la viscosité du matériau, à contrôler au moins l'une des quantités du liquide supercritique ou du liquide presque supercritique, de la pression de traitement et de la température de traitement de manière à ne pas provoquer ni permettre le moussage du matériau, et à traiter le matériau avec sa viscosité réduite.

2. Procédé selon la revendication 1, dans lequel la quantité de liquide supercritique ou presque supercritique ajoutée est insuffisante pour provoquer le moussage du matériau mais suffisante pour réduire la viscosité du matériau.

3. Procédé selon la revendication 1 ou 2, dans lequel l'étape consistant à traiter avec une viscosité inférieure inclut le maintien du matériau au-dessus d'une pression prédéterminée.

4. Procédé selon l'une quelconque des revendications précédentes, incluant l'étape consistant à supprimer le liquide du matériau au cours du traitement et après le traitement de celui-ci.

5. Procédé selon la revendication 4, dans lequel le liquide est enlevé par extraction positive.

6. Procédé selon la revendication 5, dans lequel l'extraction positive est réalisée par aspiration.

7. Procédé selon la revendication 5, dans lequel l'extraction positive est réalisée en fournissant une section poreuse de traitement de l'ensemble qui retient le matériau et permet la sortie du liquide supercritique.

8. Procédé selon la revendication 7, dans lequel le moussage est empêché au cours du traitement en contrôlant la pression de la combinaison du matériau et du liquide.

9. Procédé selon l'une quelconque des revendications précédentes, dans lequel le liquide supercritique est le dioxyde de carbone, l'eau ou l'azote.

10. Procédé selon l'une quelconque des revendications précédentes, dans lequel le procédé est l'un du moulage par extrusion ou du moulage par injection.

11. Procédé selon la revendication 10, dans lequel le matériau et le liquide supercritique ou presque supercritique sont mélangés dans l'extrudeuse ou le moule.

12. Procédé de traitement du matériau selon l'une quelconque des revendications précédentes, incluant les étapes consistant à fournir un matériau ayant une viscosité supérieure à celle requise par le processus et le traitement dudit matériau au niveau de sa viscosité réduite.

13. Système de traitement du matériau dans un processus qui nécessite l'écoulement du matériau, incluant un moyen permettant de contenir le matériau à traiter, un moyen permettant d'ajouter au matériau un liquide supercritique ou presque supercritique, un moyen de contrôle pouvant être actionné pour contrôler au moins l'une de la quantité du liquide supercritique ou presque supercritique ajoutée au matériau, de la pression de traitement et de la température de traitement de manière à ne pas provoquer ni permettre le moussage du matériau, et une unité de traitement pouvant être actionnée pour traiter le matériau avec sa viscosité réduite.

14. Système selon la revendication 13, dans lequel le moyen permettant d'ajouter un liquide supercritique ou presque supercritique inclut un récipient d'un liquide supercritique ou presque supercritique.

15. Système selon la revendication 13 ou 14, incluant un moyen permettant d'enlever un liquide supercritique ou presque supercritique au cours du traitement ou après le traitement de celui-ci.

16. Système selon la revendication 15, dans lequel le moyen de suppression inclut un dispositif d'aspiration.

17. Système selon la revendication 15 ou 16, dans lequel le moyen de suppression inclut une section poreuse qui retient le matériau et permet l'évacuation du liquide supercritique.

18. Système selon l'une quelconque des revendications 13 à 17, dans lequel le système inclut une extrudeuse ou un moule.

19. Système selon la revendication 18, dans lequel le système fournit le matériau et le liquide supercritique ou presque supercritique devant être mélangés dans l'extrudeuse ou le moule.
